# EUROPÄISCHE PATENTSCHRIFT

(11) **EP 3 918 528 B1**
(45) Veröffentlichungstag und Bekanntmachung des Hinweises auf die Patenterteilung: **25.06.2025**
(21) Anmeldenummer: 20700480.5
(22) Anmeldetag: 10.01.2020
(51) Int. Cl.: G06N 3/0895, G06N 3/045

(54) **VERFAHREN ZUM TRAINIEREN UND ZUM BETRIEB EINES MULTITASKINGFÄHIGEN KÜNSTLICHEN NEURONALEN NETZ, MULTITASKINGFÄHIGES KÜNSTLICHES NEURONALES NETZ UND VORRICHTUNG**
METHOD FOR TRAINING AND OPERATING AN ARTIFICIAL NEURAL NETWORK CAPABLE OF MULTITASKING, ARTIFICIAL NEURAL NETWORK CAPABLE OF MULTITASKING AND APPARATUS
PROCÉDÉ POUR LA FORMATION ET LE FONCTIONNEMENT D'UN RÉSEAU DE NEURONE ARTIFICIELS MULTITÂCHES, RÉSEAU DE NEURONES ARTIFICIELS MULTITÂCHES ET DISPOSITIF

(30) Priorität: 30.01.2019 DE 102019201188
(43) Veröffentlichungstag der Anmeldung: 08.12.2021
(73) Patentinhaber: Robert Bosch GmbH, 70442 Stuttgart (DE)
(72) Erfinder: BARIAMIS, Dimitrios, 31141 Hildesheim (DE)
(86) Internationale Anmeldenummer: PCT/EP2020/050511
(87) Internationale Veröffentlichungsnummer: WO 2020/156780

(56) Entgegenhaltungen:
- PENGFEI LIU ET AL: "Recurrent Neural Network for Text Classification with Multi-Task Learning", ARXIV.ORG, CORNELL UNIVERSITY LIBRARY, 201 OLIN LIBRARY CORNELL UNIVERSITY ITHACA, NY 14853, 17 May 2016 (2016-05-17), XP080701588
- THUNG KIM-HAN ET AL: "Multi-stage Diagnosis of Alzheimer's Disease with Incomplete Multimodal Data via Multi-task Deep Learning", 9 September 2017, INTERNATIONAL CONFERENCE ON FINANCIAL CRYPTOGRAPHY AND DATA SECURITY; [LECTURE NOTES IN COMPUTER SCIENCE; LECT.NOTES COMPUTER], SPRINGER, BERLIN, HEIDELBERG, PAGE(S) 160 - 168, ISBN: 978-3-642-17318-9, XP047450912

## Beschreibung

Die vorliegende Erfindung betrifft allgemein das Gebiet künstlicher Intelligenz und des maschinellen Lernens. Insbesondere betrifft die Erfindung ein Verfahren zum Trainieren eines multitaskingfähigen künstlichen neuronalen Netzes, ein multitaskingfähiges künstliches neuronales Netz sowie eine Vorrichtung mit einem solchen künstlichen neuronalen Netz. Ferner betrifft die Erfindung auch ein Computerprogramm und ein Speichermedium.

### Stand der Technik

Im Bereich künstlicher Intelligenz und insbesondere im Bereich des maschinellen Lernens kommen häufig künstliche neuronale Netze, KNN, zum Einsatz. Die technischen Aufgaben, die ein solches KNN erfüllen kann, sind zahlreich und erstrecken sich auf eine Vielzahl von technischen Gebieten, zu denen unter anderem die Automatisierungstechnik, Robotik, deren Teilgebiete wie Bilderkennung oder ähnliches, usw. zählen.

Dabei können auch multitaskingfähige KNN zum Einsatz kommen, die dazu eingerichtet sind, ausgehend von Eingangsdaten, die dem KNN zugeführt werden, mehrere, das heißt wenigstens zwei, unterschiedliche Aufgaben bzw. Tasks parallel zueinander auszuführen, insbesondere gleichzeitig, zeitgleich, alternierend oder ähnliches. Im Vergleich zum Betrieb von mehreren parallelen (nur) singletaskfähigen KNN, die ausgehend von jeweils zugeführten Eingangsdaten jeweils nur eine spezifische Aufgabe bzw. Task einzeln ausführen können, können multitaskingfähige KNN zumindest einen Teil von dem KNN inhärenten Funktionen, Zwischenberechnungen usw. für mehrere Aufgaben bzw. Tasks gemeinsam nutzen. Dadurch können gegenüber der Nutzung von mehreren jeweils nur singletaskfähigen KNN beispielsweise Rechenressourcen eingespart werden, wie etwa Rechenzeiten, Speicherplatz, Speicherbandbreiten usw. Auch bereits während des Trainings eines solchen multitaskingfähigen KNN können gemeinsame Informationen genutzt werden, um eine möglichst gute Gesamtleistung für die Mehrzahl von zu erfüllenden Aufgaben bzw. Tasks zu trainieren. Es hat sich jedoch als nachteilig erwiesen, dass durch die gemeinsame Nutzung von Funktionen, Zwischenberechnungen, Informationen oder ähnlichem des KNN, eine Abhängigkeit zwischen den unterschiedlichen Aufgaben bzw. Tasks entstehen kann, die taskspezifische Anpassungen des multitaskingfähigen KNN erschweren, indem sie z.B. eine (Neu-)Validierung sämtlicher Aufgaben bzw. Tasks erforderlich machen. Beispielsweise könnte bei einer Anpassung, die eigentlich nur eine einzelne Aufgabe bzw. Task betreffen soll, eine in diesem Fall unerwünschte Mitanpassung einer anderen Aufgabe bzw. Task erfolgen, so dass nicht nur die eigentlich anzupassende Aufgabe bzw. Task, sondern auch die unerwünscht mit angepasste Aufgabe bzw. Task erneut validiert werden muss.

Aus der Veröffentlichung PENGFEI LIU ET AL, "Recurrent Neural Network for

Text Classification with Multi-Task Learning", ARXIV.ORG, CORNELL UNIVERSITY LIBRARY, 201 OLIN LIBRARY CORNELL UNIVERSITY ITHACA, NY 14853, 17. Mai 2016 (2016-05-17), (online abrufbar: https://arxiv.org/abs/1605.05101) ist ein Multi-Task-Lernframework bekannt, um gemeinsam über mehrere verwandte Aufgaben hinweg zu lernen.

Aus der Veröffentlichung HUNG KIM-HAN ET AL, "Multi-stage Diagnosis of Alzheimer's Disease with Incomplete Multimodal Data via Multi-task Deep Learning", 9. September 2017 (2017-09-09), INTERNATIONAL CONFERENCE ON FINANCIAL CRYPTOGRAPHY AND DATA SECURITY, LECTURE NOTES IN COMPUTER SCIENCE, SPRINGER, BERLIN, HEIDELBERG, PAGE(S) 160 - 168, ISBN: 978-3-642-17318-9, ist ein Multi-Task-Deep-Learning für unvollständige Daten bekannt, bei dem Vorhersageaufgaben, die mit verschiedenen Modalitätskombinationen verbunden sind, gemeinsam gelernt werden, um die Leistung jeder Aufgabe zu verbessern.

### Offenbarung der Erfindung

Ausführungsformen der Erfindung stellen eine verbesserte Möglichkeit zur Anwendung eines multitaskfähigen künstlichen neuronalen Netzes, KNN, zur Verfügung. Vorteilhafte Weiterbildungen der Erfindung ergeben sich aus den abhängigen Ansprüchen, der Beschreibung sowie den begleitenden Figuren.

Ein erster Aspekt der Erfindung betrifft ein Verfahren zum Trainieren eines multitaskingfähigen künstlichen neuronalen Netzes, KNN, gemäß des unabhängigen Anspruchs 1. Das Verfahren sieht die folgenden Schritte vor:
Es wird ein erster Pfad für einen ersten Informationsfluss durch das KNN bereitgestellt. Dieser erste Pfad koppelt eine Eingabeschicht (z.B. Input Layer) des KNN mit wenigstens einer taskübergreifenden Zwischenschicht (z.B. Hidden Layer) des KNN, wobei die wenigstens eine taskübergreifende Zwischenschicht auch als taskübergreifender KNN-Abschnitt bezeichnet werden kann. Die Zwischenschicht ist für eine Mehrzahl, als mindestens zwei, von zueinander unterschiedlichen Tasks des KNN gemeinsam bzw. wird von oder für diese Tasks geteilt, so dass sie von Hidden Layer auch zu einem Shared Layer weiter spezifiziert werden kann. Zudem koppelt der erste Pfad die wenigstens eine taskübergreifende Zwischenschicht mit einem jeweiligen taskspezifischen KNN-Abschnitt aus der Mehrzahl der zueinander unterschiedlichen Tasks. Die jeweilige KNN-Abschnitt ist also genau einer einzigen Task zugeordnet, wobei für jede Task auch mehrere, insbesondere hierarchisch angeordnete, KNN-Abschnitten vorgesehen sein können. Dabei kann die wenigstens eine KNN-Abschnitt eine taskspezifische Ausgangsschicht (z.B. Output Layer) des KNN zum Ausführen einer spezifischen Task sein bzw. umfassen. Dementsprechend kann die taskspezifische Ausgangsschicht Ausgangsdaten und/oder ein Ausgangssignal erzeugen bzw. bereitstellen.

Über die Eingabeschicht und den ersten Pfad werden erste Trainingsdaten zum Trainieren von taskübergreifenden Parametern zuführt. Diese taskübergreifenden Parameter sind der Mehrzahl von zueinander unterschiedlichen Tasks des KNN gemeinsam, können also beispielsweise zwischen den Tasks geteilt, wiederverwendet usw. werden. Unter den taskübergreifenden Parametern können insbesondere Gewichte, Verzerrungen, Aktivierungsfunktionen usw. des KNN verstanden werden.

Es wird zusätzlich zu dem ersten Pfad wenigstens ein taskspezifischer, zweiter Pfad für einen zu dem ersten Informationsfluss unterschiedlichen, zweiten Informationsfluss durch das KNN bereitgestellt. Der zweite Pfad koppelt die Eingabeschicht des KNN mit nur einem Teil der taskspezifischen KNN-Abschnitte aus der Mehrzahl der zueinander unterschiedlichen Tasks. In anderen Worten mündet der über den zweiten Pfad bewirkte Informationsfluss nicht in alle unterschiedlichen Tasks, sondern nur in einen Teil davon. Exemplarisch kann der zweite Pfad bei einem KNN, das beispielhaft insgesamt zwei unterschiedliche Tasks ausführen soll, einen Informationsfluss nur zu einer einzigen Task zulassen, wohingegen die andere Task von dem zweiten Pfad entkoppelt ist.

Es werden zweite Trainingsdaten zum Trainieren von taskspezifischen Parametern über den zweiten Pfad zugeführt. Die zweiten Trainingsdaten sind vorzugsweise zumindest taskspezifisch, sind also wenigstens einer aus der Mehrzahl von unterschiedlichen Tasks zugeordnet.

Dieses Verfahren kann die Anwendung eines multitaskfähigen KNN verbessern, indem nur eine einzige oder eine Teilmenge von mehreren spezifischen Tasks separat verändert und/oder verbessert werden. Unter Veränderung und/oder Verbessern kann in diesem Zusammenhang insbesondere verstanden werden, dass diese einzige oder diese Teilmenge von mehreren spezifischen Tasks neu trainiert, angepasst, korrigiert, feinjustiert usw. werden kann. Dabei stellt das vorgeschlagene Verfahren jedoch sicher, dass die übrigen Tasks davon nicht beeinflusst werden, insbesondere die diesen zugeordneten taskspezifischen Parameter, wie etwa deren Gewichte, Verzerrungen, Aktivierungsfunktionen usw. Es versteht sich, dass dieses Neutrainieren, Anpassen, Korrigieren, Feinjustieren usw. anhand der zweiten Trainingsdaten über den zweiten Pfad erfolgt.

Durch das vorgeschlagene Verfahren ist es dagegen einerseits möglich, gewünschte Gemeinsamkeiten bzw. Abhängigkeiten zwischen den unterschiedlichen Tasks vorteilhaft zu nutzen, um durch die gemeinsame Nutzung von Funktionen, Zwischenberechnungen, Informationen oder ähnlichem Rechenressourcen einzusparen, aber andererseits eine gewisse Entkopplung der unterschiedlichen Tasks zu erreichen, um einzelne Tasks individuell anzupassen. Sollte das KNN für seine Anwendung validiert werden müssen, um beispielsweise eine Freigabe im Produktivbetrieb in z.B. der Automatisierungstechnik, Robotik usw. zu erhalten, kann das vorgeschlagene Verfahren den dazu benötigten Aufwand signifikant reduzieren, da durch den zweiten Pfad prinzipiell nur die damit gekoppelte Task validiert werden muss, da sich die übrigen Tasks seit der letzten Validierung nicht (mehr) verändert haben.

Unter dem KNN kann insbesondere ein gerichteter Graph verstanden werden, dessen Knoten eine Anzahl von Neuronen, die in den oben beschriebenen Schichten angeordnet sind, und dessen Kanten Verbindungen dazwischen darstellen. Die zu trainierenden Parameter können insbesondere die Intensität des Informationsflusses entlang dieser Verbindungen beeinflussen. Dementsprechend kann der erste Pfad Informationen entlang von allen Knoten und/oder Kanten, der zweite Pfad Informationen aber nur entlang von einer Teilmenge dieser Knoten und/oder Kanten zulassen. Unter einer Task kann in diesem Zusammenhang insbesondere eine, ggf. in sich geschlossene, Aufgabe, dargestellt durch beispielsweise zumindest einen Teil eines Computerprogramms verstanden werden.

Die unterschiedlichen Tasks können jeweils Aufgaben in der Automatisierungstechnik, Robotik usw., wie etwa für einen zumindest teilweise automatisierten, also teilautonomen Roboter, ausführen. Beispielhafte Anwendungen für ein solches KNN finden sich z.B. auch in der Fahrzeugtechnik, insbesondere für zumindest teilweise automatisierte Fahrzeuge.

Darüber hinaus sind auch andere Anwendungen in der Automatisierungstechnik allgemein und z.B. in der Fahrzeugtechnik im speziellen denkbar.

Eine Weiterbildung sieht vor, dass ein Informationsfluss von der wenigstens einen taskübergreifenden Zwischenschicht hin zu dem zweiten Pfad zugelassen werden kann, jedoch ein gegenläufiger Informationsfluss von dem zweiten Pfad hin zu der taskübergreifenden Zwischenschicht verhindert werden kann. In anderen Worten, können für die mit dem zweiten Pfad gekoppelten Task weiterhin die gemeinsamen Parameter usw. genutzt werden, während diese durch den zweiten Pfad nicht verändert werden können und somit für die übrigen Tasks unverändert bleiben können. Der Informationsfluss des zweiten Pfads ist hinsichtlich der taskübergreifenden Zwischenschicht unidirektional. Dies erlaubt eine besonders rechenressourcenschonende Anpassung einzelner Tasks.

Eine andere Weiterbildung sieht vor, dass der wenigstens eine taskspezifische KNN-Abschnitt in sich mehrschichtig, d.h. mit entsprechend mehreren hierarchisch angeordneten, taskspezifischen Task(zwischen)schichten (also ggf. taskspezifischen Hidden Layers), ausgebildet sein kann. Es sei angemerkt, dass sich eine Anzahl von taskspezifischen Taskschichten der einen Task von der Anzahl von taskspezifischen Taskschichten einer anderen Task unterscheiden kann. Bezogen auf eine Darstellung des KNN als Graph, kann der wenigstens eine taskspezifische KNN-Abschnitt also mehrere taskspezifische Knoten aufweisen, die über entsprechende taskspezifische Kanten nur innerhalb desselben taskspezifischen KNN-Abschnitts miteinander verbunden sind.

In einer Weiterbildung kann über den zweiten Pfad der jeweilige taskspezifische KNN-Abschnitt verändert bzw. angepasst werden. Insbesondere kann eine Anzahl von taskspezifischen Taskschichten usw. dieses KNN-Abschnitts verändert werden. Beispielsweise können diesem taskspezifischen KNN-Abschnitt weitere taskspezifische Taskschichten hinzugefügt werden oder bestehende taskspezifische Schichten davon entfernt werden. Zusätzlich oder alternativ dazu kann auch eine Anzahl von z.B. Neuronen einer oder mehrerer taskspezifischer Schichten des taskspezifischen KNN-Abschnitts verändert, also z.B. reduziert oder erhöht, werden. Dies ermöglicht eine besonders gute Anpassung einzelner Tasks, ohne die anderen Tasks mit zu verändern. Gemäß einer Weiterbildung können die über den zweiten Pfad zugeführten zweiten Trainingsdaten aus Eingangsdaten, die der Eingabeschicht zugeführt werden, und aus Zwischenschichtdaten kombiniert werden, die aus der wenigstens einen taskübergreifenden Zwischenschicht abgeleitet werden. Dies erlaubt eine besonders rechenressourcenschonende Anpassung einzelner Tasks.

In einer Weiterbildung können aus einer Mehrzahl von taskübergreifenden Zwischenschichten diejenigen für eine Verknüpfung mit dem zweiten Pfad ausgewählt werden, die das Trainieren der taskspezifischen Parameter unterstützen. Beispielsweise ist es möglich, dass aus der Mehrzahl von insbesondere hierarchisch angeordneten taskübergreifenden Zwischenschichten nur solche mit dem zweiten Pfad verbunden sind, die für die Anpassung der mit dem zweiten Pfad gekoppelten Task relevant, hilfreich, sinnvoll oder dergleichen sind. Damit lässt sich die taskspezifische Qualität des KNN noch weiter verbessern.

Gemäß einer Weiterbildung kann zwischen dem Zuführen der ersten Trainingsdaten und dem Zuführen der zweiten Trainingsdaten eine Validierung von zumindest einem Teil der von dem KNN ausführbaren Tasks durchgeführt werden. Das Zuführen der zweiten Trainingsdaten zum Anpassen von wenigstens einer spezifischen Task kann unter Ausschluss einer Anpassung von wenigstens einer dazu unterschiedlichen, weiteren spezifischen Task durchgeführt werden. Da die weitere spezifische Task bereits nach dem Zuführen der Trainingsdaten und ggf. einem Testbetrieb validiert worden ist und durch das Zuführen der zweiten Trainingsdaten aufgrund der Entkopplung von dem zweiten Pfad nicht mehr verändert worden ist, kann auf eine weitere Validierung der weiteren spezifischen Task verzichtet werden. Dadurch kann das KNN mit wenig Validierungsaufwand angepasst werden.

Ein zweiter Aspekt der Erfindung betrifft ein computerimplementiertes multitaskingfähiges künstliches neuronales Netz, KNN, gemäß des unabhängigen Anspruchs 6.

Wie oben beschrieben, kann unter dem KNN insbesondere ein gerichteter Graph verstanden werden, dessen Knoten eine Anzahl von Neuronen, die in den oben beschriebenen Schichten angeordnet sind, und dessen Kanten Verbindungen dazwischen darstellen. Das vorgeschlagene KNN weist eine Eingabeschicht, eine Mehrzahl von taskspezifischen KNN-Abschnitten, nämlich der Anzahl der Tasks entsprechenden Anzahl, die einer Mehrzahl von zueinander unterschiedlichen Tasks des KNN zugeordnet sind, und wenigstens eine taskübergreifenden Zwischenschicht auf, die zwischen der Eingabeschicht und der Mehrzahl von taskspezifischen KNN-Abschnitten angeordnet ist und eine Anzahl von taskübergreifend verwendbaren Parametern umfasst.

Zudem weist das vorgeschlagene KNN einen ersten Pfad auf, der die Eingabeschicht über die wenigstens eine taskübergreifende Zwischenschicht mit der Mehrzahl von taskspezifischen KNN-Abschnitte für einen ersten Informationsfluss durch das KNN koppelt.

Zusätzlich weist das vorgeschlagene KNN wenigstens einen taskspezifischen, zweiten Pfad auf, der die Eingabeschicht mit nur einem Teil aus der Mehrzahl von taskspezifischen KNN-Abschnitten für einen von dem ersten Informationsfluss unterschiedlichen, taskspezifischen zweiten Informationsfluss durch das KNN koppelt.

Dieses KNN ermöglicht eine rechenressourcenschonende Anpassung einer oder mehrerer spezifischer Tasks des KNN. Vorteilhafterweise können über den ersten Pfad zunächst solche Parameter, wie etwa Gewichte, Verzerrungen, Aktivierungsfunktionen usw. trainiert werden, die allen (oder zumindest mehreren) Tasks gemeinsam sind. Wenn sich jedoch während einer Validierung oder einem Produktivbetrieb des KNN herausstellen sollte, dass eine spezifische Task bzw. deren Ausführung in irgendeiner Art verändert werden muss, kann dies ohne Beeinflussung der übrigen spezifischen Tasks erfolgen. Dadurch können Vorteile eines multitaskfähigen KNN hinsichtlich gemeinsamer Nutzung bestimmter Anteile des KNN mit Vorteilen einer einfachen Anpassung spezifischer Tasks ähnlich einem singletaskfähigen KNN kombiniert werden.

Gemäß einer Weiterbildung kann eine Anzahl von Schichten des zweiten Pfades unterschiedlich sein zu einer Anzahl der taskübergreifenden Zwischenschichten. In anderen Worten, kann der zweite Pfad eine von dem ersten Pfad, insbesondere hinsichtlich der taskübergreifenden Zwischenschichten, abweichende Anzahl von Knoten und/oder Kanten aufweisen. Dabei kann ein Knoten und/oder eine Kante des zweiten Pfads mit einer oder mehreren von Knoten und/oder Kanten des ersten Pfads verbunden sein. Dies ermöglicht eine freie Konfiguration des KNN für die Verbesserung und/oder Veränderung einer oder mehrerer spezifischer Täks mit Einsatz möglichst geringer Rechenressourcen.

In einer Weiterbildung kann das KNN eine Mehrzahl von zweiten Pfaden aufweisen. Dabei kann jeder zweite Pfad für einen taskspezifischen Informationsfluss zu nur einer Teilanzahl der Mehrzahl von taskspezifischen KNN-Abschnitte eingerichtet sein. In anderen Worten, kann das KNN mehrere zweite Pfade aufweisen, die jeweils (nur) einer spezifischen Task zugeordnet sind, so dass die unterschiedlichen zweiten Pfade hinsichtlich ihres jeweiligen Informationsflusses voneinander entkoppelt sind. Dadurch können die oben beschriebenen Vorteile für das Verändern und/oder Verbessern einzelner spezifischer Tasks auch dann erreicht werden, wenn das KNN drei oder mehr zueinander unterschiedliche Tasks ausführen soll und beispielsweise nur zwei von drei oder mindestens drei von mindestens vier unterschiedlichen Tasks usw. verändert und/oder verbessert werden sollen.

Gemäß einer Weiterbildung kann das KNN wenigstens eine rekurrente taskübergreifende Zwischenschicht aufweisen, die für einen Informationsfluss hin zu dem zweiten Pfad eingerichtet ist. Unter einer rekurrenten taskübergreifenden Zwischenschicht kann verstanden werden, dass diese eine direkte Rückkopplung, bei der der Knoten seinen Output als erneuten Input nutzt, eine indirekte Rückkopplung, bei der der Output eines Knotens als Input Knotens in einer vorgelagerten taskübergreifende Zwischenschicht verwendet, oder eine seitliche Rückkopplung aufweist, bei der der Output eines Knotens als Input eines Knotens in derselben taskübergreifende Zwischenschicht verwendet.

In einer anderen Weiterbildung kann auch der zweite Pfad wenigstens eine rekurrente Schicht aufweisen. Wie oben beschrieben, kann diese rekurrente Schicht einer von ggf. mehreren Knoten des zweiten Pfads sein. In diesem Zusammenhang kann unter einer rekurrenten Schicht verstanden werden, dass diese eine direkte Rückkopplung, bei der der Knoten seinen Output als erneuten Input nutzt, eine indirekte Rückkopplung, bei der der Output eines Knotens als Input Knotens in einer vorgelagerten taskübergreifende Zwischenschicht verwendet, oder eine seitliche Rückkopplung aufweist, bei der der Output eines Knotens als Input eines Knotens in derselben taskübergreifende Zwischenschicht verwendet.

Ein dritter Aspekt der Erfindung stellt eine Vorrichtung zur Verfügung, die wenigstens ein computerimplementiertes multitaskingfähiges künstliches neuronales Netz, KNN, wie vorstehend beschrieben umfasst. Dabei kann das KNN als Software, als Hardware oder als Mischform von Software und Hardware implementiert sein.

Die Vorrichtung kann beispielsweise als Computer, elektronisches Steuergerät oder als Steuergeräteverbund oder ähnliches ausgebildet sein. Zudem kann die Vorrichtung wenigstens einen Prozessor, einen Speicher, wie etwa einen flüchtigen und einen nichtflüchtigen Speicher, eine oder mehrere Datenschnittstellen zu Erfassungseinrichtungen, wie etwa Sensoren, Aktuatoren eines Automaten, Roboter oder ähnliches, eine Kommunikationsschnittstelle usw. aufweisen. Die Vorrichtung kann auch dazu eingerichtet sein, Eingangsdaten in Form von z.B. Signalen zu erhalten, diese der Eingabeschicht des oben beschriebenen KNN zuzuführen, und dessen Ausgangsdaten bereitzustellen. Demnach kann die Vorrichtung z.B. in der Automatisierungstechnik, Robotik oder ähnlichem eingesetzt werden, wobei spezifische Tasks, wie oben beschrieben, verändert und/oder verbessert werden können.

Ein vierter Aspekt der Erfindung stellt ein Verfahren zum Betrieb eines computerimplementierten multitaskingfähigen künstlichen neuronalen Netzes, KNN, zur Verfügung. Das KNN kann beispielsweise in der oben beschriebenen Vorrichtung, wie etwa einem Computer, elektronischen Steuergerät usw., implementiert sein.

Das vorgeschlagene Verfahren sieht die folgenden Schritte vor:
In einer ersten Phase wird eine Mehrzahl von zueinander unterschiedlichen Tasks des KNN durch das Zuführen von ersten Trainingsdaten über einen ersten Pfad, der einen ersten Informationsfluss durch das KNN zulässt, gemeinsam trainiert. Dies kann insbesondere durch das vorstehend beschriebene Verfahren in einer oder mehreren der beschriebenen Ausführungsvarianten erfolgen.

In einer zweiten Phase können eine oder mehrere der Tasks des trainierten KNN ausgeführt werden. Dies können z.B. unterschiedliche Tasks in der Automatisierungstechnik, Robotik usw. sein.

In einer dritten Phase kann wenigstens eine der Tasks des KNN durch das Zuführen von zweiten Trainingsdaten über einen zu dem ersten Pfad unterschiedlichen, zweiten Pfad, der einen zu dem ersten Informationsfluss unterschiedlichen, zweiten Informationsfluss durch das KNN zulässt, unabhängig von wenigstens einer weiteren aus der Mehrzahl der Tasks trainiert und/oder korrigiert wird. Dies kann insbesondere durch das vorstehend beschriebene Verfahren in einer oder mehreren der beschriebenen Ausführungsvarianten erfolgen.

Dadurch lässt sich eine wenigstens eine einzelne Task des KNN nachträglich verändern und/oder verbessern, ohne dass unerwünscht andere Tasks mit verändert werden.

Ein vierter Aspekt der Erfindung betrifft ein Computerprogramm, umfassend Befehle, die bei der Ausführung des Computerprogramms durch einen Computer diesen veranlassen, eines der vorstehend beschriebenen Verfahren, also ein Verfahren gemäß dem ersten oder dritten Aspekt, in einer oder mehreren der jeweils beschriebenen Ausführungsvarianten auszuführen.

Ein fünfter Aspekt der Erfindung betrifft ein maschinenlesbares Speichermedium, auf dem ein Computerprogramm gemäß dem vierten Aspekt gespeichert ist.

Das computerlesbare Speichermedium kann insbesondere, aber nicht notwendigerweise, ein nichtflüchtiges Medium sein, das sich insbesondere zum Speichern und/oder Verteilen eines Computerprogramms eignet. Das computerlesbare Speichermedium kann eine CD-ROM, eine DVD-ROM, ein optisches Speichermedium, ein Festkörpermedium oder ähnliches sein, das zusammen mit oder als Teil anderer Hardware geliefert wird. Zusätzlich oder alternativ dazu, kann das computerlesbare Speichermedium auch in anderer Form verteilt bzw. vertrieben werden, beispielsweise über ein Datennetzwerk, wie etwa das Internet oder andere drahtgebundene oder drahtlose Telekommunikationssysteme. Hierzu kann das computerlesbare Speichermedium beispielsweise als ein oder mehrere Datenpakete ausgeführt sein.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Kurze Beschreibung der Figuren

Im Folgenden werden vorteilhafte Ausführungsbeispiele der Erfindung mit Bezug auf die begleitenden Figuren detailliert beschrieben. Es zeigen:
- Figur 1: zeigt in einem Blockdiagramm eine Vorrichtung mit einem künstlichen neuronalen Netz gemäß einer Ausführungsform der Erfindung,
- Figur 2: zeigt in einem Blockdiagramm eine Vorrichtung mit einem künstlichen neuronalen Netz gemäß einer Ausführungsform der Erfindung,
- Figur 3: zeigt in einem Blockdiagramm eine Vorrichtung mit einem künstlichen neuronalen Netz gemäß einer Ausführungsform der Erfindung,
- Figur 4: zeigt in einem Blockdiagramm eine Vorrichtung mit einem künstlichen neuronalen Netz gemäß einer Ausführungsform der Erfindung und
- Figur 5: zeigt die Ausführungsform gemäß Figur 4 zur besseren Veranschaulichung als gerichteten azyklischen Graph.

Die Figuren sind lediglich schematisch und nicht maßstabsgetreu. In den Figuren sind gleiche, gleichwirkende oder ähnliche Elemente durchgängig mit gleichen Bezugszeichen versehen.

### Ausführungsformen der Erfindung

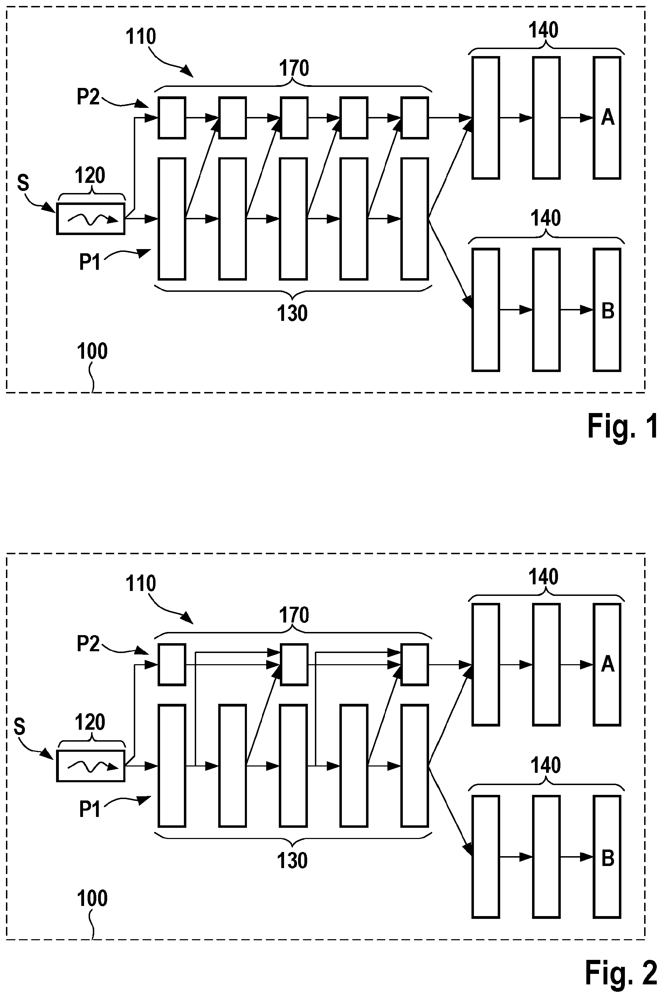

Figur 1 zeigt in einem Blockdiagramm eine Vorrichtung 100, die beispielsweise in einem (nicht gezeigten) zumindest teilweise automatisierten Roboter implementiert sein kann. Bei der Vorrichtung 100 handelt es sich hier exemplarisch um einen Computer in Form eines elektronischen Steuergeräts, das z.B. als eingebettetes System ausgebildet sein kann, um beispielsweise Automatisierungs- und/oder Steuerungsaufgaben des Roboters auszuführen. Lediglich beispielhaft kann der Roboter ein zumindest teilweise automatisiert fahrendes Fahrzeug, wie etwa ein zumindest teilweise automatisiertes Kraftfahrzeug, sein. Die Vorrichtung 100 ist - zumindest im Produktivbetrieb - ferner dazu eingerichtet, Eingangssignale von z.B. Sensoren des Roboters zu erhalten, diese zu verarbeiten und selbst Ausgangssignale in Reaktion auf die Eingangssignale zu erzeugen und diese beispielsweise für einen Aktuator des Roboters bereitzustellen. Bezogen auf das Beispiel eines Fahrzeugs, kann die Vorrichtung 100 zumindest Teilfunktionen des Fahrzeugs anhand von eingehenden Sensorsignalen durch eine Ansteuerung eines Aktuators und/oder Fahrzeugantriebs usw. zu steuern.

Die Vorrichtung 100 umfasst ein künstliches neuronalen Netz 110, das im Folgenden mit KNN abgekürzt wird und hier zur besseren Veranschaulichung als gerichteter Graph mit einer Anzahl von Knoten und Kanten dargestellt ist. Die Knoten stellen Schichten bzw. eine Anzahl von in den Schichten angeordneten Neuronen dar. Die Kanten stellen Verbindungen zwischen den Schichten bzw. den in den Schichten angeordneten Neuronen dar.

Das KNN 110 ist multitaskingfähig, also dazu eingerichtet, mehrere Tasks parallel zueinander, z.B. zeitgleich, alternierend usw., auszuführen. In diesem Ausführungsbeispiel ist das KNN 110 dazu eingerichtet, wenigstens zwei zueinander unterschiedliche Tasks auszuführen, die in Figur 1 und im Folgenden durch die Bezugszeichen A und B voneinander unterschieden werden.

Das KNN 110 ist zur Bildverarbeitung eingerichtet. Der Task A ist eine Verkehrszeichenerkennung und der Task B ist eine semantische Szenensegmentierung.

Wie in Figur 1 dargestellt, ist das KNN 110 mehrschichtig ausgebildet, mit einer Eingabeschicht 120, wenigstens einer taskübergreifenden Zwischenschicht 130 und mehreren, nämlich der Anzahl der Tasks A, B entsprechenden Anzahl, von taskspezifischen KNN-Abschnitten 140. In Figur 1 bezieht sich die Mehrzahl von KNN-Abschnitte 140 also auf die zwei Tasks A und B, so dass das KNN 110 hier exemplarisch zwei KNN-Abschnitte 140 aufweist. Prinzipiell kann jede der KNN-Abschnitten 140 eine Ausgabeschicht des KNN 110 darstellen. Wie in Figur 1 angedeutet, kann jeder der KNN-Abschnitte 140 auch in sich mehrschichtig mit entsprechend mehreren hierarchisch angeordneten, taskspezifischen Taskschichten ausgebildet sein, wobei hier lediglich exemplarisch für jede der Tasks A und B jeweils drei taskspezifische Taskschichten dargestellt sind, und wobei die Anzahl derselben nach oben und unten abweichen kann. Die Anzahl von Zwischenschichten 130 beträgt hier exemplarisch Fünf, wobei auch mehr oder weniger Zwischenschichten 130 vorgesehen sein können.

Die taskübergreifenden Zwischenschichten 130 sind, wie in Figur 1 durch die entsprechenden Knoten und Kanten angedeutet, beiden Tasks A und B gemein. Es handelt sich also um Schichten, die sich die Tasks A und B teilen (Shared Layers). Geteilt werden können insbesondere taskübergreifend verwendbare Parameter, wie etwa Gewichte der einzelnen Knoten, das heißt Schichten bzw. Neuronen, Aktivierungsfunktionen usw. Beispielhaft kann die Komplexität der Zwischenschichten 130 hierarchisch zunehmen.

Gemäß Figur 1 ist die Eingabeschicht 120 über eine Kante mit den Zwischenschichten 130 und diese wiederum über jeweils eine Kante mit den taskspezifischen KNN-Abschnitten 140 gekoppelt, so dass ein Informationsfluss von der Eingabeschicht 120 über die Zwischenschichten 130 hin zu den den Tasks A und B zuordbaren KNN-Abschnitten 140, die als jeweilige Ausgabeschicht funktionieren, möglich ist. In Figur 1 ist durch einen Pfeil ein Eingangssignal S angedeutet, das den entsprechenden Informationsfluss bewirkt. In einer Trainingsphase kann das Eingangssignal S Trainingsdaten darstellen, während im Produktivbetrieb der Vorrichtung 100 beispielsweise Sensordaten oder ähnliches eingespeist werden.

Wie in Figur 1 dargestellt, weist das KNN 110 einen ersten Pfad P1 auf, der die Eingabeschicht 120 über die taskübergreifenden Zwischenschichten 130 mit den taskspezifischen KNN-Abschnitten 140 für einen ersten Informationsfluss in der durch die Pfeile der Kanten angedeuteten Richtung durch das KNN 110 koppelt. Dementsprechend koppelt jeweils eine Kante der in Richtung des Informationsflusses letzten Zwischenschicht 130 diese mit der in Richtung des Informationsflusses ersten Schicht des jeweiligen taskspezifischen KNN-Abschnitts 140. Das heißt, dass sich der Informationsfluss des ersten Pfades P1 von der letzten der Zwischenschichten 130 in Richtung der ersten Task A und in Richtung der zweiten Task B verzweigt.

Wie weiter in Figur 1 dargestellt, weist das KNN 110 zusätzlich einen zweiten Pfad P2 auf, dessen zweiter Informationsfluss sich von dem vorstehend beschriebenen ersten Informationsfluss unterscheidet. So umfasst der zweite Pfad P2 selbst weitere Knoten 170, die über weitere Kanten miteinander verbunden sind. Die Knoten 170 können wiederum als Schichten bzw. als in Schichten angeordnete Neuronen verstanden werden. Der zweite Pfad P2 mündet nur in eine der beiden Tasks, nämlich in diesem Ausführungsbeispiel in die erste Task A. Somit stellt der Pfad P2 einen taskspezifischen Seitenpfad dar, der zwar den zweiten Informationsfluss zu einer einzelnen der Tasks, hier also die erste Task A, zulässt, aber von der wenigstens einen anderen Task, hier also Task B, entkoppelt ist. Demensprechend beeinflusst der zweite Informationsfluss entlang des zweiten Pfads P2 auch nur die diesem zugeordnete Task, also hier die erste Task A, während die andere Task, hier die Task B, nicht beeinflusst wird.

In dem Ausführungsbeispiel gemäß Figur 1 weist der zweite Pfad P2 lediglich exemplarisch eine Anzahl von Knoten auf, die der Anzahl der taskübergreifenden Zwischenschichten 130 entspricht. Diese Anzahl kann sich jedoch auch unterscheiden. Die in Richtung des Informationsflusses letzte der Knoten bzw. Schichten 170 des zweiten Pfads P2 ist mit dem der ersten Task A zugeordneten KNN-Abschnitt 140 gekoppelt. Lediglich exemplarisch weist der KNN-Abschnitt von z.B. der Task A hier drei taskspezifische Taskschichten auf, von denen die in Richtung des Informationsflusses erste mit der letzten der Knoten bzw. Schichten 170 des zweiten Pfads P2 gekoppelt ist. Es sei angemerkt, dass der Informationsfluss des zweiten Pfads P2 hin zu der ersten Task A dabei mit wenigstens einem Operator erfolgen kann, so dass der Informationsfluss des zweiten Pfads P2 hin zu der ersten Task A beispielsweise additiv, subtrahierend, multiplikativ, konkatenierend usw., sein kann. Wie in Figur 1 dargestellt, können einzelne oder alle Schichten 170 des zweiten Pfads P2 mit Zwischenschichtdaten, also z.B. den oben beschriebenen taskübergreifend verwendbaren Parametern, kombiniert werden, die aus den taskübergreifenden Zwischenschichten 130 abgeleitet werden. In anderen Worten, kann es einen Informationsfluss entlang einer Kante geben, die eine oder mehrere der taskübergreifenden Zwischenschichten 130 mit dem zweiten Pfad P2, z.B. mit einer Kante oder einem Knoten desselben, koppelt. Entlang dieser Kante können dann beispielsweise taskübergreifend verwendbare Daten, insbesondere Parameter, dem zweiten Pfad P2 zugeführt werden. Es sei angemerkt, dass dieser Informationsfluss vorzugsweise unidirektional (also ausschließlich von den taskübergreifenden Zwischenschichten 130 hin zu dem zweiten Pfad P2) ist, damit der Informationsfluss über den zweiten Pfad P2 die Parameter, Daten usw. der taskübergreifenden Zwischenschichten 130 nicht verändern kann.

Figur 2 zeigt in einem Blockdiagramm eine weitere Ausführungsform der Vorrichtung 100 bzw. des KNN 110. Im Wesentlichen unterscheidet sich diese Ausführungsform von der in Figur 1 gezeigten dadurch, dass der zweite Pfad P2 eine Anzahl von Schichten 170 aufweist, die von der Anzahl der taskübergreifenden Zwischenschichten 130 des ersten Pfads P1 abweicht. Lediglich exemplarisch ist die Anzahl der Schichten 170 des zweiten Pfads P2 hier geringer als die Anzahl der taskübergreifenden Zwischenschichten 130 des ersten Pfads P1, wobei dies auch umgekehrt möglich ist. Dennoch können dem zweiten Pfad P2 weiterhin sämtliche taskübergreifend verwendbaren Parameter zugeführt werden, da entsprechende Kanten von dem ersten Pfad P1 hin zu dem zweiten Pfad P2 vorgesehen sind.

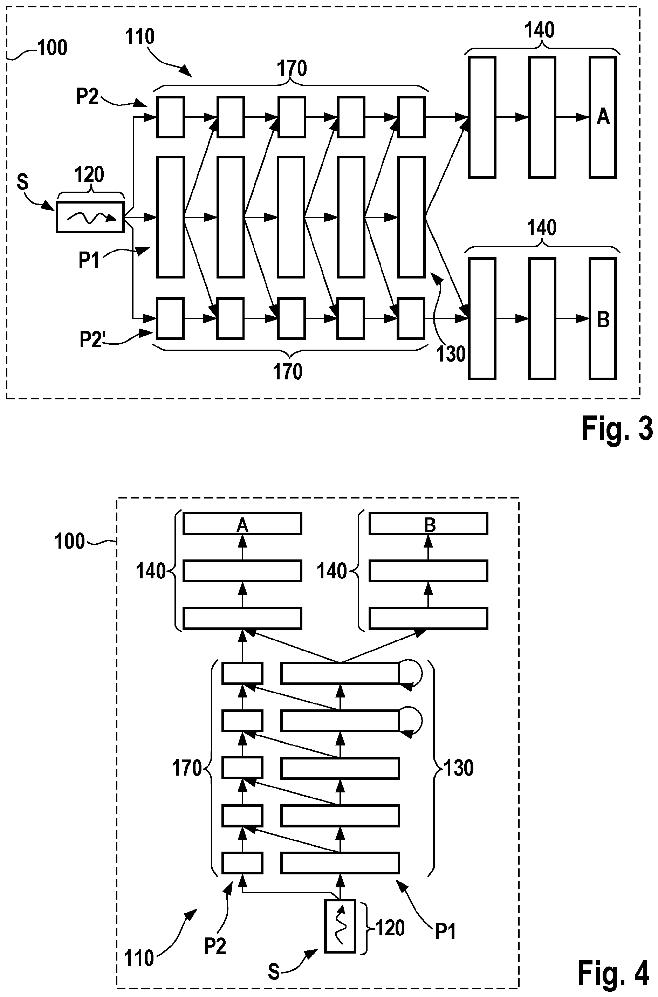

Figur 3 zeigt in einem Blockdiagramm eine weitere Ausführungsform der Vorrichtung 100 bzw. des KNN 110. Von den vorstehend beschriebenen Ausführungsformen unterscheidet sich diese Ausführungsform im Wesentlichen dadurch, dass auch für die zweite Task B ein weiterer zweiter Pfad P2' für einen zweiten Informationsfluss durch das KNN 110 vorgesehen ist. Für den weiteren zweiten Pfad P2' gilt im Prinzip das für den zweiten Pfad P2 vorstehend Beschriebene. Es sei angemerkt, dass der zweite Pfad P2' - wie anschaulich in Figur 3 dargestellt - nur die zweite Task B beeinflussen kann, aber keinen Einfluss auf die erste Task A ausüben kann.

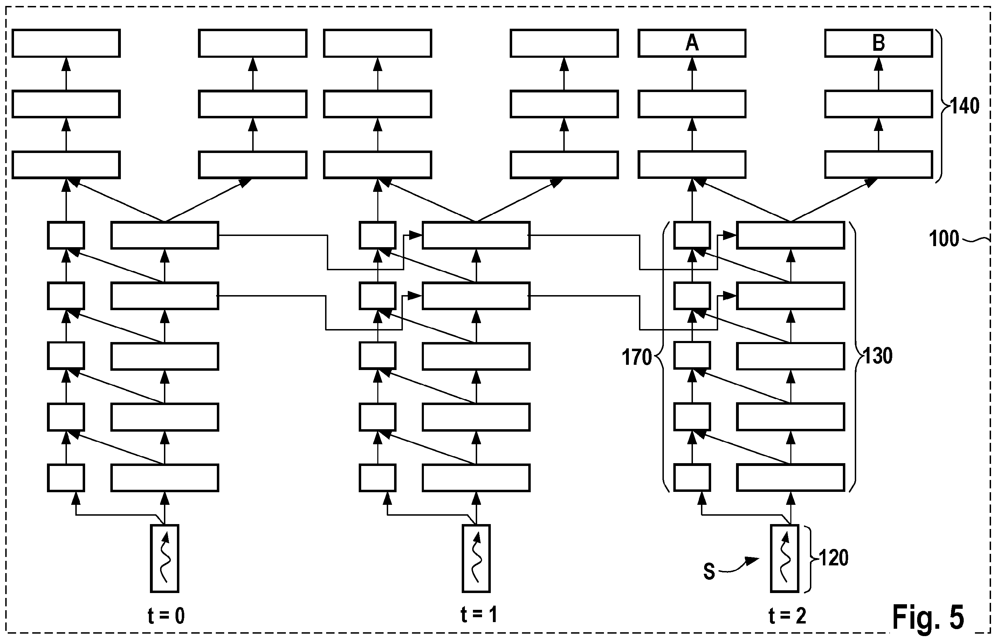

Die Figuren 4 und 5 zeigen in jeweils einem Blockdiagramm eine weitere Ausführungsform der Vorrichtung 100 bzw. des KNN 110. Gemäß dieser Ausführungsform können einige oder ggf. auch alle der taskübergreifenden Zwischenschichten 130 als rekurrente Schichten (recurrent Layers) ausgeführt sein. Dementsprechend kann hier der Informationsfluss zwischen den taskübergreifenden Zwischenschichten 130 untereinander und/oder hin zu dem zweiten Pfad P2 komplexer sein als in den vorstehend beschriebenen Ausführungsformen. Um einen entsprechend komplexeren, exemplarischen Informationsfluss durch das KNN 110 zu verdeutlichen, ist das KNN 110 gemäß dieser Ausführungsform in Figur 5 als gerichteter azyklischer Graph zu unterschiedlichen Zeitpunkten t für das Eingangssignal S mit t=0, t=1 und t=2 dargestellt.

Anhand von Figur 1, die ein Blockschaltbild zeigt, wird nachfolgend beispielhaft erläutert, wie die Vorrichtung 100 bzw. das KNN 110 zum Ausführen der unterschiedlichen Tasks A, B trainiert werden können.

Wie oben beschrieben, verfügt das KNN 110 über den ersten Pfad P1 für den ersten Informationsfluss durch das KNN 110. Über diesen ersten Pfad P1 werden in einer Phase erste Trainingsdaten zugeführt, die dazu eingerichtet sind, die den Tasks A und B gemeinsamen, taskübergreifenden Parameter in den taskübergreifenden Zwischenschichten 130 zu trainieren, wobei in diesem Training beispielsweise Gewichte der einzelnen Schichten bzw. der darin angeordneten Neuronen eingestellt werden, um dann die jeweilige Task A bzw. B in einer gewünschten Qualität ausführen zu können. Auf diese Weise können auch nach und nach die unterschiedlichen Tasks A und B trainiert werden. Nach dem Training ist das KNN 110 dann prinzipiell für einen Produktivbetrieb angepasst bzw. trainiert. Es sei angemerkt, dass diese Trainingsdaten hier zur besseren Übersichtlichkeit durch das Eingangssignal 120 repräsentiert sind.

Üblicherweise wird das KNN 110 vor dem Produktivbetrieb noch validiert. Stellt sich bei der Validierung jedoch heraus, dass eine Task, z.B. die erste Task A gemäß Figur 1, nicht die gewünschte Leistung erbringt, ermöglicht die oben beschriebene Architektur des KNN 110 mittels des zweiten Pfads P2 für den zweiten Informationsfluss durch das KNN 110 ein Nachtrainieren, Feinjustieren, Korrigieren usw., oder allgemein ausgedrückt eine Anpassung, der spezifischen Task A Hierzu werden taskspezifische, zweite Trainingsdaten über den taskspezifischen zweiten Pfad P2 zugeführt, die eine Anpassung der einen Task, hier der ersten Task A ohne eine Beeinflussung der anderen Task, hier der zweiten Task B, ermöglichen. Es sei angemerkt, dass diese Trainingsdaten hier zur besseren Übersichtlichkeit durch das Eingangssignal 120 repräsentiert sind.

Da sich durch das Zuführen der taskspezifischen Trainingsdaten über den zweiten Pfad P2 (das gilt auch für den weiteren zweiten Pfad P2') nur die Parameter, Einstellungen usw. der Task A ändern, das heißt sowohl die Parameter der taskübergreifenden Zwischenschichten 130 als auch die der Task B zugeordneten, taskspezifischen Parameter, Einstellungen usw. der Tasks B nicht mit ändern, verringert sich der Aufwand der Validierung im Nachgang erheblich. Es versteht sich, dass bei gleichbleibender Task B dann nur die über den zweiten Pfad P2 bzw. P2', durch Zuführen der zweiten Trainingsdaten, veränderte Task A validiert werden muss, da sich die den Tasks A und B gemeinsamen Parameter, Einstellungen usw. nicht geändert haben.

Das vorstehend beschriebene Prinzip des Trainings, insbesondere des taskspezifischen Trainings, kann auf sämtliche Ausführungsformen dieser Anmeldung entsprechend übertragen werden.

## Patentansprüche

1. Computerimplementiertes Verfahren zum Trainieren eines multitaskingfähigen künstlichen neuronalen Netzes (110), KNN,
wobei das KNN eingerichtet ist, dem KNN zugeführte Bilder zur Ausführung einer Mehrzahl von unterschiedlichen Tasks mittels dem KNN zu verarbeiten, wobei die Mehrzahl von unterschiedlichen Tasks zumindest einen ersten Task (A) sowie einen zweiten Task (B) umfasst,
wobei der erste Task (A) eine Verkehrszeichenerkennung und der zweite Task (B) eine semantische Szenensegmentierung ist,
wobei das KNN eine Eingabeschicht (120), wenigstens eine taskübergreifende Zwischenschicht (130) sowie eine Mehrzahl von korrespondierender taskspezifischer KNN-Abschnitte umfasst,
wobei jeder taskspezifische KNN-Abschnitt als Ausgabeschicht des KNN für den zu diesem KNN-Abschnitt korrespondierenden Task funktioniert,
mit den Schritten:
- Bereitstellen eines ersten Pfads (P1) für einen ersten Informationsfluss durch das KNN (110), wobei der erste Pfad (P1) die Eingabeschicht (120) des KNN (110) mit der wenigsten einen taskübergreifenden Zwischenschicht (130) des KNN (110) koppelt, und der erste Pfad (P1) die wenigstens eine taskübergreifende Zwischenschicht (130) mit jedem taskspezifischen KNN-Abschnitt (140) aus der Mehrzahl korrespondierender taskspezifischer KNN-Abschnitte koppelt,
- Zuführen von ersten Trainingsdaten zum Trainieren von taskübergreifenden Parametern, die der Mehrzahl von zueinander unterschiedlichen Tasks des KNN (110) gemeinsam sind, über die Eingabeschicht (120) und den ersten Pfad (P1),
- Bereitstellen von wenigstens einem taskspezifischen, zweiten Pfad (P2) für einen zu dem ersten Informationsfluss unterschiedlichen, zweiten Informationsfluss durch das KNN (110), wobei der zweite Pfad (P2) die Eingabeschicht (120) des KNN (110) mit nur einem taskspezifischen KNN-Abschnitt (140) aus der Mehrzahl der taskspezifischer KNN-Abschnitte koppelt, wobei es sich bei dem Task, für welchen der eine taskspezifische KNN-Abschnitt als Ausgabeschicht des KNN funktioniert, um den Task (A) oder um den Task (B) handelt, und
- Zuführen von zweiten Trainingsdaten und Trainieren von nur taskspezifischen Parametern über den zweiten Pfad (P2) anhand der zweiten Trainingsdaten zum Trainieren des KNN für denjenigen Task, für welchen der eine taskspezifische KNN-Abschnitt als Ausgabeschicht des KNN funktioniert.

2. Verfahren nach Anspruch 1, wobei ein Informationsfluss von der wenigstens einen taskübergreifenden Zwischenschicht hin zu dem zweiten Pfad (P2) zugelassen wird, jedoch ein gegenläufiger Informationsfluss von dem zweiten Pfad (P2) hin zu der taskübergreifenden Zwischenschicht (130) verhindert wird.

3. Verfahren nach Anspruch 1 oder 2, wobei die über den zweiten Pfad (P2) zugeführten zweiten Trainingsdaten aus Eingangsdaten, die der Eingabeschicht (120) zugeführt werden, und aus Zwischenschichtdaten kombiniert werden, die aus der wenigstens einen taskübergreifenden Zwischenschicht (130) abgeleitet werden.

4. Verfahren nach einem der vorhergehenden Ansprüche, wobei aus einer Mehrzahl von taskübergreifenden Zwischenschichten (130) diejenigen für eine Verknüpfung mit dem zweiten Pfad (P2) ausgewählt werden, die das Trainieren der taskspezifischen Parameter unterstützen.

5. Verfahren nach einem der vorhergehenden Ansprüche, wobei zwischen dem Zuführen der ersten Trainingsdaten und dem Zuführen der zweiten Trainingsdaten eine Validierung von zumindest einem Teil der von dem KNN (110) ausführbaren Tasks (A, B) durchgeführt wird, und das Zuführen der zweiten Trainingsdaten zum Anpassen von wenigstens einer spezifischen Task (A, B) unter Ausschluss einer Anpassung von wenigstens einer dazu unterschiedlichen, weiteren spezifischen Task (A, B) durchgeführt wird.

6. Computerimplementiertes Multitaskingfähiges künstliches neuronales Netz (110), KNN, trainiert mit einem Verfahren nach einem der vorhergehenden Ansprüche, wobei ein erster Task (A) eine Verkehrszeichenerkennung und ein zweiter Task (B) eine semantische Szenensegmentierung ist, mit
- einer Eingabeschicht (120),
- einer Mehrzahl von taskspezifischen KNN-Abschnitten (140), die einer Mehrzahl von zueinander unterschiedlichen Tasks des KNN (110) zugeordnet sind,
- wenigstens einer taskübergreifenden Zwischenschicht (130), die zwischen der Eingabeschicht (120) und der Mehrzahl von taskspezifischen KNN-Abschnitte (140) angeordnet ist und eine Anzahl von taskübergreifend verwendbaren Parametern umfasst,
- einem ersten Pfad (P1), der die Eingabeschicht (120) über die wenigstens eine taskübergreifende Zwischenschicht (130) mit der Mehrzahl von taskspezifischen KNN-Abschnitten (140) für einen ersten Informationsfluss durch das KNN (110) koppelt, und
wenigstens einem taskspezifischen, zweiten Pfad (P2), der die Eingabeschicht (120) mit nur einem Teil aus der Mehrzahl von taskspezifischen KNN-Abschnitten (140) für einen von dem ersten Informationsfluss unterschiedlichen, taskspezifischen zweiten Informationsfluss durch das KNN (110) koppelt.

7. Multitaskingfähiges KNN nach Anspruch 6, wobei eine Anzahl von Schichten des zweiten Pfades (P2) unterschiedlich ist zu einer Anzahl der taskübergreifenden Zwischenschichten.

8. Multitaskingfähiges KNN nach Anspruch 6 oder 7, das eine Mehrzahl von zweiten Pfaden (P2) aufweist und jeder zweite Pfad (P2) für einen taskspezifischen Informationsfluss zu nur einer Teilanzahl der Mehrzahl von taskspezifischen KNN-Abschnitten (140) eingerichtet ist.

9. Multitaskingfähiges KNN nach Anspruch einem der Ansprüche 6 bis 8, das wenigstens eine rekurrente taskübergreifende Zwischenschicht (130) aufweist, die für einen Informationsfluss hin zu dem zweiten Pfad (P2) eingerichtet ist.

10. Vorrichtung, mit wenigstens einem multitaskingfähigen künstlichen neuronalen Netz (110), KNN, nach einem der Ansprüche 6 bis 9.

11. Computerimplementiertes Verfahren zum Betrieb eines multitaskingfähigen künstlichen neuronalen Netzes (110), KNN, nach einem der Ansprüche 6-9.

12. Computerprogramm, umfassend Befehle, die bei der Ausführung des Computerprogramms durch einen Computer diesen veranlassen, ein Verfahren gemäß einem der Ansprüche 1 bis 5 oder 11 auszuführen.

13. Maschinenlesbares Speichermedium, auf dem ein Computerprogramm nach Anspruch 12 gespeichert ist.

## Claims

1. Computer-implemented method for training an artificial neural network (110), ANN, capable of multitasking,
wherein the ANN is configured to process images supplied to the ANN for the execution of a plurality of different tasks by means of the ANN, wherein the plurality of different tasks comprises at least a first task (A) and a second task (B),
wherein the first task (A) is traffic sign recognition and the second task (B) is a semantic scene segmentation,
wherein the ANN comprises an input layer (120), at least one cross-task intermediate layer (130) and a plurality of corresponding task-specific ANN sections,
wherein each task-specific ANN section functions as the output layer of the ANN for the task corresponding to this ANN section, comprising the following steps:
- providing a first path (P1) for a first information flow through the ANN (110), wherein the first path (P1) couples the input layer (120) of the ANN (110) to the least one cross-task intermediate layer (130) of the ANN (110), and the first path (P1) couples the at least one cross-task intermediate layer (130) to each task-specific ANN section (140) from the plurality of corresponding task-specific ANN sections,
- supplying first training data for training cross-task parameters, which are common to the plurality of mutually different tasks of the ANN (110), via the input layer (120) and the first path (P1),
- providing at least one task-specific, second path (P2) for a second information flow, different from the first information flow, through the ANN (110), wherein the second path (P2) couples the input layer (120) of the ANN (110) to only one task-specific ANN section (140) from the plurality of task-specific ANN sections, wherein the task for which one task-specific ANN section functions as the output layer of the ANN is the task (A) or the task (B), and
- supplying second training data and training only task-specific parameters via the second path (P2) on the basis of the second training data for training the ANN for that task for which one task-specific ANN section functions as the output layer of the ANN.

2. Method according to Claim 1, wherein an information flow from the at least one cross-task intermediate layer to the second path (P2) is permitted, but an opposite information flow from the second path (P2) to the cross-task intermediate layer (130) is prevented.

3. Method according to Claim 1 or 2, wherein the second training data supplied via the second path (P2) are combined from input data supplied to the input layer (120) and from intermediate layer data derived from the at least one cross-task intermediate layer (130).

4. Method according to any of the preceding claims, wherein from a plurality of cross-task intermediate layers (130) those which assist the training of the task-specific parameters are selected for a linkage with the second path (P2).

5. Method according to any of the preceding claims, wherein a validation of at least a portion of the tasks (A, B) executable by the ANN (110) is carried out between supplying the first training data and supplying the second training data, and supplying the second training data, for the purpose of adapting at least one specific task (A, B), is carried out with the exclusion of an adaptation of at least one further specific task (A, B) which is different therefrom.

6. Computer-implemented artificial neural network (110), ANN, capable of multitasking, and trained by a method according to any of the preceding claims,
wherein a first task (A) is traffic sign recognition and a second task (B) is a semantic scene segmentation, comprising
- an input layer (120),
- a plurality of task-specific ANN sections (140) assigned to a plurality of mutually different tasks of the ANN (110),
- at least one cross-task intermediate layer (130) arranged between the input layer (120) and the plurality of task-specific ANN sections (140) and comprising a number of parameters usable in a cross-task manner,
- a first path (P1), which couples the input layer (120) via the at least one cross-task intermediate layer (130) to the plurality of task-specific ANN sections (140) for a first information flow through the ANN (110), and
at least one task-specific, second path (P2), which couples the input layer (120) to only a portion of the plurality of task-specific ANN sections (140) for a task-specific second information flow, different from the first information flow, through the ANN (110).

7. ANN capable of multitasking according to Claim 6, wherein a number of layers of the second path (P2) is different from a number of the cross-task intermediate layers.

8. ANN capable of multitasking according to Claim 6 or 7, which has a plurality of second paths (P2) and each second path (P2) is configured for a task-specific information flow to only a partial number of the plurality of task-specific ANN sections (140).

9. ANN capable of multitasking according to any of Claims 6 to 8, which has at least one recurrent cross-task intermediate layer (130) configured for an information flow to the second path (P2).

10. Device, comprising at least one artificial neural network (110), ANN, capable of multitasking according to any of Claims 6 to 9.

11. Computer-implemented method for operating an artificial neural network (110), ANN, capable of multitasking according to any of Claims 6-9.

12. Computer program, comprising instructions which, when the computer program is executed by a computer, cause the latter to carry out a method according to any of Claims 1 to 5 or 11.

13. Machine-readable storage medium on which a computer program according to Claim 12 is stored.

## Revendications

1. Procédé mis en œuvre par ordinateur pour entraîner un réseau de neurones artificiels (110) multitâches, KNN,
le KNN étant conçu pour traiter des images qui lui sont fournies en vue de l'exécution d'une pluralité de tâches différentes au moyen du KNN, la pluralité de tâches différentes comprenant au moins une première tâche (A) ainsi qu'une deuxième tâche (B),
la première tâche (A) étant une reconnaissance de panneaux de signalisation et la deuxième tâche (B) étant une segmentation sémantique de scène,
le KNN comprenant une couche d'entrée (120), au moins une couche intermédiaire indépendante des tâches (130) ainsi qu'une pluralité de sections correspondantes du KNN spécifiques aux tâches,
chaque section du KNN spécifique à une tâche fonctionnant comme une couche de sortie du KNN pour la tâche correspondant à cette section du KNN, comprenant les étapes suivantes :
- fourniture d'un premier chemin (P1) pour un premier flux d'informations à travers le KNN (110), le premier chemin (P1) couplant la couche d'entrée (120) du KNN (110) à l'au moins une couche intermédiaire indépendante des tâches (130) du KNN (110), et le premier chemin (P1) couplant l'au moins une couche intermédiaire indépendante des tâches (130) à chaque section du KNN spécifique à une tâche (140) parmi la pluralité de sections correspondantes du KNN spécifiques aux tâches,
- fourniture de premières données d'apprentissage pour entraîner des paramètres indépendants des tâches, qui sont communs à la pluralité de tâches du KNN (110) différant les unes des autres, à travers la couche d'entrée (120) et le premier chemin (P1),
- fourniture d'au moins un deuxième chemin (P2) spécifique à une tâche pour un deuxième flux d'informations différent du premier flux d'informations à travers le KNN (110), le deuxième chemin (P2) couplant la couche d'entrée (120) du KNN (110) à seulement une section du KNN spécifique à une tâche (140) parmi la pluralité de sections du KNN spécifiques aux tâches, la tâche pour laquelle la section du KNN spécifique à une tâche fonctionne comme une couche de sortie du KNN étant la tâche (A) ou la tâche (B), et
- fourniture de deuxièmes données d'apprentissage et entraînement de paramètres uniquement spécifiques aux tâches par l'intermédiaire du deuxième chemin (P2) sur la base des deuxièmes données d'apprentissage pour entraîner le KNN pour la tâche pour laquelle la section du KNN spécifique à une tâche fonctionne comme une couche de sortie du KNN.

2. Procédé selon la revendication 1, dans lequel un flux d'informations allant de l'au moins une couche intermédiaire indépendante des tâches vers le deuxième chemin (P2) est autorisé, mais un flux d'informations en sens inverse allant du deuxième chemin (P2) vers la couche intermédiaire indépendante des tâches (130) est empêché.

3. Procédé selon la revendication 1 ou 2, dans lequel les deuxièmes données d'apprentissage fournies par l'intermédiaire du deuxième chemin (P2) sont combinées à partir de données d'entrée, qui sont fournies à la couche d'entrée (120), et à partir de données de couche intermédiaire, qui sont déduites de l'au moins une couche intermédiaire indépendante des tâches (130).

4. Procédé selon l'une quelconque des revendications précédentes, dans lequel, parmi une pluralité de couches intermédiaires indépendantes des tâches (130), celles qui prennent en charge l'entraînement des paramètres spécifiques aux tâches sont sélectionnées pour une combinaison avec le deuxième chemin (P2).

5. Procédé selon l'une quelconque des revendications précédentes, dans lequel, entre la fourniture des premières données d'apprentissage et la fourniture des deuxièmes données d'apprentissage, une validation d'au moins une partie des tâches (A, B) exécutables par le KNN (110) est effectuée, et la fourniture des deuxièmes données d'apprentissage pour l'adaptation d'au moins une tâche spécifique (A, B) est effectuée à l'exclusion d'une adaptation d'au moins une autre tâche spécifique (A, B) qui diffère de celle-ci.

6. Réseau de neurones artificiels (110) multitâches mis en œuvre par ordinateur, KNN, entraîné au moyen d'un procédé selon l'une quelconque des revendications précédentes,
une première tâche (A) étant une reconnaissance de panneaux de signalisation et une deuxième tâche (B) étant une segmentation sémantique de scène, comprenant
- une couche d'entrée (120),
- une pluralité de sections du KNN spécifiques aux tâches (140), qui sont associées à une pluralité de tâches du KNN (110) différant les unes des autres,
- au moins une couche intermédiaire indépendante des tâches (130) disposée entre la couche d'entrée (120) et la pluralité de sections du KNN spécifiques aux tâches (140) et comprenant un nombre de paramètres utilisables indépendamment des tâches,
- un premier chemin (P1) couplant la couche d'entrée (120) à travers l'au moins une couche intermédiaire indépendante des tâches (130) à la pluralité de sections du KNN spécifiques aux tâches (140) pour un premier flux d'informations à travers le KNN (110), et
au moins un deuxième chemin (P2) spécifique aux tâches couplant la couche d'entrée (120) à seulement une partie de la pluralité de sections du KNN spécifiques aux tâches (140) pour un deuxième flux d'informations spécifique aux tâches différent du premier flux d'informations à travers le KNN (110).

7. KNN multitâches selon la revendication 6, dans lequel un nombre de couches du deuxième chemin (P2) est différent d'un nombre des couches intermédiaires indépendantes des tâches.

8. KNN multitâches selon la revendication 6 ou 7, comprenant une pluralité de deuxièmes chemins (P2) et chaque deuxième chemin (P2) étant conçu pour un flux d'informations spécifique aux tâches allant vers seulement un sousensemble de la pluralité de sections du KNN spécifiques aux tâches (140).

9. KNN multitâches selon l'une quelconque des revendications 6 à 8, comprenant au moins une couche intermédiaire indépendante des tâches récurrente (130), qui est conçue pour un flux d'informations allant vers le deuxième chemin (P2).

10. Dispositif comprenant au moins un réseau de neurones artificiels (110) multitâches, KNN, selon l'une quelconque des revendications 6 à 9.

11. Procédé mis en œuvre par ordinateur pour exploiter un réseau de neurones artificiels (110) multitâches, KNN, selon l'une quelconque des revendications 6 à 9.

12. Programme informatique comprenant des instructions qui, lorsque le programme informatique est exécuté par un ordinateur, amènent celui-ci à mettre en œuvre un procédé selon l'une quelconque des revendications 1 à 5 ou 11.

13. Support de stockage lisible par machine, sur lequel est stocké un programme informatique selon la revendication 12.
